# EUROPÄISCHE PATENTSCHRIFT

(11) **EP 2 835 250 B1**
(45) Veröffentlichungstag und Bekanntmachung des Hinweises auf die Patenterteilung: **20.07.2016**
(21) Anmeldenummer: 14179887.6
(22) Anmeldetag: 05.08.2014
(51) Int. Cl.: B29C 67/00, B26F 1/00, B32B 43/00

(54) **Verfahren und Vorrichtung zur Bereitstellung von Öffnungen für Befestigungsmittel in Sandwichblechen**
Method and device for providing openings for fasteners in sandwich metal sheets
Procédé et dispositif de préparation d'ouvertures pour un moyen de fixation dans des tôles en sandwich

(30) Priorität: 08.08.2013 DE 102013108562
(43) Veröffentlichungstag der Anmeldung: 11.02.2015
(73) Patentinhaber: ThyssenKrupp Steel Europe AG, 47166 Duisburg (DE)
(72) Erfinder: Chergui, Azeddine, 44139 Dortmund (DE)
(74) Vertreter: Cohausz & Florack

(56) Entgegenhaltungen:
- DE-A1-102011 055 654
- DE-A1-102012 109 046
- DE-C1- 4 313 826

## Beschreibung

Die Erfindung betrifft ein Verfahren zur Herstellung einer Öffnung in ein Sandwichblech, welches mindestens zwei metallische Deckschichten und mindestens eine zwischen den metallischen Deckschichten angeordnete aus einem thermoplastischen Kunststoff bestehende Kernschicht aufweist, wobei die Öffnung zum Verbinden des Sandwichblechs mit einem weiteren Bauteil oder Blech unter Verwendung von Befestigungsmitteln geeignet ist, bei welchem unter Verwendung mindestens eines Stempels mindestens eine Öffnung in das Sandwichblech gestanzt wird, wobei nach dem Stanzen der Öffnung in das Sandwichblech der Randbereich der Öffnung erwärmt und derart verformt wird, dass die thermoplastische Kernschicht zumindest teilweise entlang des Umfanges der Öffnung verdrängt wird und die metallischen Deckschichten des Sandwichblechs in diesen Bereichen in Kontakt gebracht werden. Darüber hinaus betrifft die Erfindung eine Vorrichtung zur Herstellung einer Öffnung in einem Sandwichblech, wobei die Öffnung zum Verbinden des Sandwichblechs mit einem weiteren Bauteil oder Blech über Befestigungsmittel geeignet ist, umfassend einen Stempel, eine Matrize sowie Mittel zur Durchführung einer Relativbewegung zwischen Stempel und Matrize, wobei der Stempel einen Prägebereich aufweist, Mittel zur Erwärmung eines Randbereichs mindestens einer Öffnung des Leichtblechs vorgesehen sind und über die Mittel zur Durchführung der Relativbewegung des Stempels die Kernschicht des Sandwichblechs aus dem Randbereich verdrängt werden kann.

Sandwichbleche, welche üblicherweise zwei äußere metallische Deckbleche und mindestens eine zwischen den metallischen Deckschichten angeordnete, nichtmetallische Kernschicht aufweisen, welche vorzugsweise aus thermoplastischem Kunststoff besteht, werden verwendet, um Verbundblechteile bereitzustellen, welche Eigenschaften aufweisen, die sich bei einem Blech aus Vollmaterial zumeist gegenseitig ausschließen. Ein Sandwichblech ermöglicht beispielsweise trotz seines geringen Gewichts eine lokal sehr gute Steifigkeit und kann gleichzeitig sehr gute Schalldämpfungseigenschaften bereitstellen. Auch hohe Zugfestigkeiten bei gleichzeitig verringertem Gewicht können über Sandwichbleche realisiert werden. Viele Anwendungen erfordern es, dass diese Sandwichbleche mit anderen Blechteilen oder Bauteilen verbunden werden müssen. Die häufig bei Blechen angewendeten Fügeverfahren, wie Schmelzschweißen oder Löten, verursachen allerdings Probleme aufgrund ihres hohen Wärmeeintrags in die Sandwichbleche. Die üblicherweise eingesetzte thermoplastische Kunststoffschicht schmilzt zumindest teilweise auch in umliegenden Bereichen der Befestigung auf oder wird anders durch den hohen Wärmeeintrag geschädigt. Zum Verbinden von einem Sandwichblech mit einem weiteren Bauteil kann aber auch eine kraft- und/oder formschlüssige Verbindung unter Verwendung eines Befestigungsmittels, beispielsweise einer Schraube oder einer Niet, verwendet werden. Es hat sich jedoch herausgestellt, dass bei Schraubverbindungen oder Nietverbindungen aufgrund des Kriechverhaltens der nichtmetallischen, in der Regel aus Kunststoff bestehenden Kernschicht eine dauerhafte Festigkeit dieser Verbindungen nicht gewährleistet werden kann. Die Haltekraft, welche das Sandwichblech der Niet oder der Schraube entgegenbringen muss, nimmt aufgrund des Kriechverhaltens des Kunststoffes ab. Als Folge respektive durch den Verlust der Vorspannkraft lockert sich die Verbindung zwischen Sandwichblech und Blech bzw. Bauteil.

Die DE 10 2011 055 654 A1 betrifft ein Verfahren zum Herstellen eines Verbundblechs mit mindestens einem metallischen Bereich. Dabei wird die Kunststoffschicht des Verbundblechs bereichsweise erwärmt. Anschließend wird das Verbundblech in den entsprechenden Bereichen verformt und die Kunststoffschicht dadurch verdrängt. Die Deckbleche werden in den Bereichen miteinander gefügt.

Von diesem Problem ausgehend liegt der vorliegenden Erfindung die Aufgabe zugrunde, ein Verfahren und eine Vorrichtung zur Herstellung einer Öffnung in ein Sandwichblech vorzuschlagen, mit welchem bzw. mit welcher es möglich ist, eine Öffnung in ein Sandwichblech einzubringen, die zum Verbinden des Sandwichbleches mit einem weiteren Bauteil oder Blech über Befestigungsmittel geeignet ist, d.h. dauerhaft eine form- und/oder kraftschlüssige Verbindung zwischen Sandwichblech und Blech (Vollblech oder Sandwichblech) bzw. Bauteil über Befestigungsmittel ermöglicht und möglichst prozesssicher hergestellt werden kann.

Diese Aufgabe wird durch ein Verfahren gemäß Anspruch 1 und eine Vorrichtung gemäß Anspruch 10 gelöst.

Die aufgezeigte Aufgabe wird gemäß einer ersten Lehre der vorliegenden Erfindung mit einem Verfahren dadurch gelöst, dass das austretende Material der Kernschicht durch Verwendung von temperierten Ahsaugmitteln entfernt wird, und über die temperierten Absaugmittel ein Erkalten des abgesaugtes Materials während des Absaugens im Wesentlichen vermieden wird.

Es hat sich gezeigt, dass zur Ausbildung einer sicheren Verbindung eines Leichtblechs mit einem weiteren Bauteil bzw. Blech über ein Befestigungsmittel, beispielsweise eine Niet oder eine Schraube, es notwendig ist, die Kunststoffkernschicht in diesem Bereich zu entfernen und die metallischen Deckschichten in Kontakt zu bringen. Die aufeinanderliegenden Deckschichten des Leichtblechs können sehr gut zur Ausbildung einer Schraubverbindung oder eine Nietverbindung, benutzt werden. Um die Bereitstellung dieser reinmetallischen Randbereiche der Öffnung mit hoher Prozesssicherheit zu gewährleisten, werden temperierte Absaugmittel verwendet, welche den flüssigen Kunststoff aus dem Öffnungsbereich entfernen und abtransportieren. Der Abtransport wird insbesondere dadurch erleichtert, dass die Absaugmittel temperiert sind und somit ein Erkalten des flüssigen Materials während des Absaugens im Wesentlichen vermieden werden kann.

Gemäß einer ersten Ausgestaltung des Verfahrens werden lochgestanzte Leichtbleche verwendet und in bzw. mit einer Vorrichtung lediglich der Randbereich der Öffnungen verformt wird, so dass die metallischen Deckschichten im Randbereich in Kontakt gebracht werden. Durch die Aufteilung in zwei verschiedene Arbeitsgänge ist es möglich, beispielsweise das Lochstanzen mit mehrfach Werkzeugen bei hohem Durchsatz durchzuführen.

Alternativ zur ersten Ausgestaltung des erfindungsgemäßen Verfahrens erfolgt das Stanzen der Öffnung und das Verformen des Randbereichs in bzw. mit einer Vorrichtung in einem Arbeitsgang. Dies erspart Arbeitsschritte wie ein erneutes Positionieren des Sandwichblechs in einem weiteren Werkzeug, hat aber zur Folge, dass die Stanz- und Prägestempel komplexer ausgebildet sind.

Vorzugsweise werden mindestens ein Stempel mit einem Prägebereich und einem Stanzbereich sowie mindestens eine Matrize zum Stanzen der Öffnung und Verformen des Randbereichs verwendet, wobei in der Matrize eine Öffnung zur Aufnahme des ausgestanzten Sandwichblechmaterials vorgesehen ist und durch eine Relativbewegung des Stanzbereichs des Stempels gegenüber dem Prägebereich des Stempels und der Matrize eine Öffnung in das Sandwichblech gestanzt wird, kann auf einfache Weise das Stanzen der Öffnung und das Verformen des Randbereichs der Öffnung gemäß dieser Ausgestaltung in einem Arbeitsgang auf einfache Weise durchgeführt werden.

Wird gemäß einer weiteren Ausgestaltung des erfindungsgemäßen Verfahrens vor und während des Verformens des Randbereichs der Öffnung der Prägebereich des Stempels und/oder die Matrize derart erwärmt, dass durch Wärme leitenden Kontakt zwischen Prägebereich, Matrize und Sandwichblech die Kernschicht des Sandwichblechs im Randbereich der Öffnung konduktiv erwärmt wird und erweicht sowie anschließend das Material der Kernschicht in die Öffnung durch Verformen des Randbereichs verdrängt wird, kann mit hoher Wiederholgenauigkeit das Material der Kernschicht im Randbereich der Öffnung des Sandwichblechs auf prozesssichere Weise verdrängt werden und ein Kontakt zwischen den metallischen Deckschichten des Sandwichblechs in diesem Bereich bereitgestellt werden.

Die Erwärmung des Prägebereichs und/oder der Matrize kann beispielsweise über einfache, elektrische Heizelemente, welche temperaturgesteuert werden können, bereitgestellt werden. Eine sehr schnelle Erwärmung kann gemäß einer weiteren Ausgestaltung des Verfahrens dadurch bereitgestellt werden, dass vor oder während der Verformung des Randbereichs der Öffnung die metallischen Deckschichten des Sandwichblechs im Randbereich induktiv erwärmt werden. Durch die induktive Erwärmung werden lediglich die metallischen Deckschichten erwärmt, so dass die Erwärmung auf die notwendige Temperatur zur Erweichung der Kernschicht des Sandwichblechs in dem Randbereich relativ kurz ist.

Saugen die Absaugmittel während des Verformens der Randbereiche der Öffnung des Sandwichblechs das austretende Material zumindest teilweise radial in Richtung des Zentrums der Öffnung ab, kann gemäß einer weiteren Ausgestaltung dafür Sorge getragen werden, dass die austretende Kunststoffschicht sicher aus dem Bereich der Öffnung entfernt werden kann, ohne sich in anderen Bereichen des Sandwichblechs abzulagern.

Wird gemäß einer weiteren Ausgestaltung des Verfahrens über Luftführungsmittel des Prägebereichs des Stempels und/oder der Matrize Luft zum Absaugen des austretenden Materials der Kernschicht zugeführt, kann diese beispielsweise durch den Prägebereich des Stempels und/oder die Matrize erwärmt werden, so dass die zugeführte Luft ebenfalls ein Erkalten des austretenden und abzusaugenden Kunststoffmaterials verhindert.

Schließlich kann eine für den Einsatz von Befestigungsmitteln fertige Öffnung in dem Leichtblech dadurch bereitgestellt werden, dass gemäß einer nächsten Ausgestaltung die geprägte Oberfläche des Randbereichs der Öffnung des Leichtblechs während oder nach dem Herstellen des Randbereichs, insbesondere mechanisch gereinigt wird. Eine mechanische Reinigung kann beispielsweise durch Bürsten erfolgen, welche über den Randbereich rotieren und diesen säubern. Die Mittel zur mechanischen Reinigung können dabei in Absaugmitteln integriert sein.

Gemäß einer weiteren Lehre der vorliegenden Erfindung wird die oben aufgezeigte Aufgabe durch eine Vorrichtung zur Herstellung einer Öffnung in einem Sandwichblech gelöst, bei welcher temperierte Absaugmittel vorgesehen sind, welche das austretende Material der Kernschicht aus der Öffnung des Sandwichblechs entfernen und ein Erkalten des Kernschichtmaterials im Wesentlichen verhindern können.

Über die temperierten Absaugmittel besteht die Möglichkeit das austretende Material der Kernschicht flüssig zu halten und damit leichter aus dem Bereich der Öffnung des Sandwichblechs herauszuführen. Im Ergebnis kann mit höherer Prozesssicherheit ein von dem Material der Kernschicht vollständig befreite Öffnung mit für den Einsatz von Befestigungsmitteln vorgesehenem Randbereich zur Verfügung gestellt werden.

Gemäß einer ersten Ausgestaltung der Vorrichtung können auch ungestanzte Sandwichbleche dadurch verarbeitet werden, dass der Stempel zusätzlich einen Stanzbereich zum Stanzen einer Öffnung in das Leichtblech aufweist. Hierdurch können sowohl das Lochstanzen als auch das Prägen bzw. Verformen des Randbereichs in einem Arbeitsgang durchgeführt werden.

Vorzugsweise sind gemäß einer nächsten Ausgestaltung Mittel zur induktiven Erwärmung der Randbereiche der Öffnung des Sandwichblechs oder Mittel zur Erwärmung des Prägebereichs des Stempels und/oder der Matrize vorgesehen. Eine induktive Erwärmung der metallischen Deckschichten im Randbereich der Öffnung eröffnet besonders kurze Prozesszyklen, da die Erwärmung lediglich auf die metallischen Deckschichten beschränkt ist und ausreicht, dass gesamte Kunststoffmaterial der Kernschicht in den Randbereichen der Öffnungen so stark zu erweichen, dass dieses erweicht und leicht austreten kann.

Sind Mittel zur Erwärmung des Prägebereichs des Stempels und/oder der Matrize vorgesehen, können besonders einfache Vorrichtungen, beispielsweise durch Erwärmung der Prägebereiche des Stempels über Heizelemente, realisiert werden, welche zudem einfach auf einer konstanten Temperatur gehalten werden können.

Gemäß einer weiteren Ausgestaltung der Vorrichtung weisen die Absaugmittel zusätzlich Mittel zur mechanischen Entfernung von ausgetretenem Material der Kernschicht in den Randbereichen auf. Hierdurch wird sichergestellt, dass auch nach der Herstellung der Öffnung in dem Sandwichblech kein Material der Kernschicht in dem Randbereich verbleibt. Mittel zur mechanischen Entfernung von ausgetretenem Kunststoffmaterial können beispielsweise durch in radialer Richtung über die Öffnung des Sandwichblechs hinausragende Bürsten, welche über den Randbereich streichen und diesen damit reinigen, bereitgestellt werden.

Gemäß einer weiteren Ausgestaltung der Vorrichtung weisen die Absaugmittel Luftführungsmittel zur Entfernung des abgesaugten Materials aus der Öffnung des Sandwichblechs auf, wobei die Luftführungsmittel temperiert sind. Durch temperierte Luftführungsmittel, beispielsweise durch Heizelemente erwärmte Luftkanäle, kann das Kunststoffmaterial noch in nahezu flüssigem Zustand abgesaugt werden und damit leichter aus dem Bereich der Öffnung entfernt werden. Hierzu werden die Luftführungsmittel üblicherweise durch elektrische Heizelemente aufgeheizt, so dass diese die notwendige Temperatur aufweisen.

Darüber hinaus können gemäß einer weiteren Ausgestaltung der Vorrichtung der Prägebereich des Stempels und/oder die Matrize Luftführungsmittel aufweisen, welche Luft zum Absaugen des austretenden Materials der Kernschicht von außen der Öffnung des Sandwichblechs zuführen. Insbesondere durch die Zuführung durch den Prägebereich des Stempels bzw. der Matrize besteht die Möglichkeit die Luft bereits zu temperieren und damit auf die Temperatur des erweichten Kunststoffs zu bringen, so dass dieser in weichem Zustand aus dem Bereich der Öffnung auf einfache entfernt werden kann.

Gemäß einer weiteren Ausgestaltung der Vorrichtung sind Absaugmittel vorgesehen, welche in die Öffnung des Sandwichblechs einführbar sind, so dass Luftführungsmittel der Absaugmittel in unmittelbare Nähe des austretenden Materials des Randbereichs gebracht werden können und damit ein Absaugen des Kernschichtmaterials auf besonders sichere Weise gelingt.

Vorzugsweise weisen hierzu die Absaugmittel mindestens eine radial nach außen weisende Absaugöffnung auf, so dass das austretende Material unmittelbar vom Rand der Öffnung entfernt werden kann.

Im Weiteren soll die Erfindung anhand von Ausführungsbeispielen in Verbindung mit der Zeichnung näher erläutert werden. Die Zeichnung zeigt in
- Fig. 1: in einer perspektivischen Darstellung ein vorgestanztes Sandwichblech mit einer Öffnung,
- Fig. 2 und Fig. 3: ein Ausführungsbeispiel einer erfindungsgemäßen Vorrichtung zur Verarbeitung von vorgestanzten Sandwichblechen in schematischer, perspektivischer Darstellung,
- Fig. 4: in einer schematischen, perspektivischen Darstellung ein Teil der Absaugmittel gemäß dem Ausführungsbeispiel aus Fig. 2 und Fig. 3,
- Fig. 5: in einer Schnittansicht den Teil der Absaugmittel aus Fig. 4,
- Fig. 6 bis 9: in einer schematischen Darstellung zu verschiedenen Zeitpunkten ein weiteres Ausführungsbeispiel einer Vorrichtung zum Stanzen und Prägen von Öffnung in Sandwichblechen gemäß der vorliegenden Erfindung sowie
- Fig. 10 und Fig. 11: in einer perspektivischen Darstellung sowie in einer Schnittdarstellung ein Sandwichblech mit Öffnungen hergestellt unter Verwendung des erfindungsgemäßen Verfahrens und
- Fig. 12: in einer Schnittdarstellung ein weiteres Ausführungsbeispiel eines Sandwichbleches mit Öffnungen hergestellt unter Verwendung des erfindungsgemäßen Verfahrens.

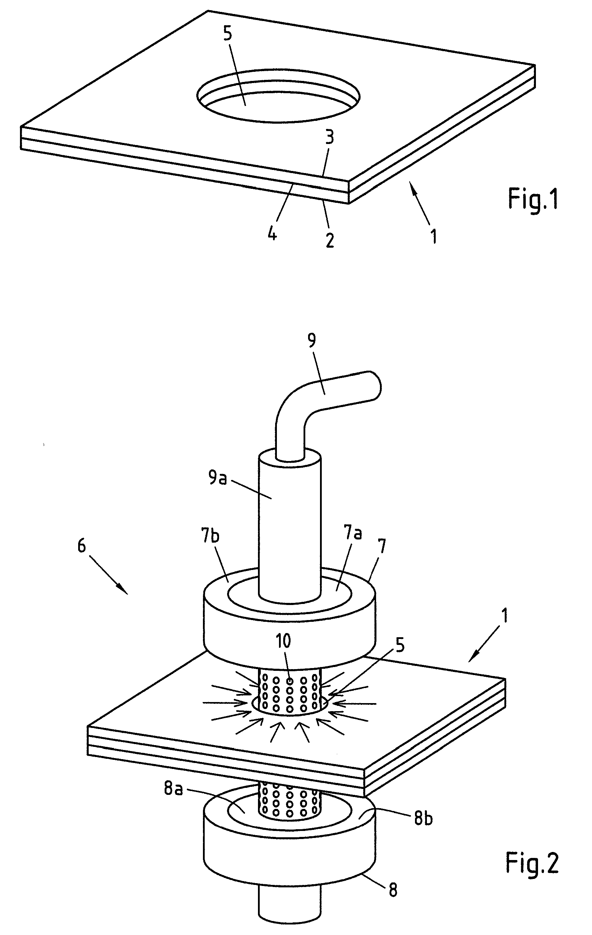

In Fig. 1 ist zunächst ein Sandwichblech 1 dargestellt, welches aus zwei metallischen Deckschichten 2, 3 und einer zwischen den metallischen Deckschichten angeordneten Kunststoffschicht, bestehend aus einem thermoplastischen Kunststoff 4, besteht. In einem vorgelagerten Arbeitsschritt ist eine Öffnung 5 in das Sandwichblech 1 eingebracht worden. Wie einleitend ausgeführt, besteht das Problem, dass eine entsprechende Öffnung 5 in einem Sandwichblech nicht für die Verwendung von Befestigungsmitteln, beispielsweise für die Verwendung von Schrauben oder einer Niet geeignet ist. Aufgrund der Haltekräfte, welche eine Schraub- oder Nietverbindung benötigt, kommt es aufgrund des Kriechverhaltens des Kunststoffs der thermoplastischen Kunststoffschicht 4 im Zeitverlauf bzw. kann bei Verbindungen im Fahrzeug, die einen KTL-Prozess durchlaufen, bereits im Lackeinbrennofen zu einer Lockerung der Schraub- oder Nietverbindung mit dem Sandwichblech führen.

In Fig. 2 ist nun in einer schematischen, perspektivischen Darstellung ein erstes Ausführungsbeispiel einer Vorrichtung 6 zur Herstellung einer Öffnung in einem Sandwichblech dargestellt, welche zum Verbinden des Sandwichblechs mit einem weiteren Bauteil oder Blech über Befestigungsmittel geeignet ist, dargestellt. Die Vorrichtung 6 umfasst einen Stempel 7, eine Matrize 8 und nicht dargestellte Mittel, mit welchen Stempel 7 und Matrize 8 relativ zueinander bewegt werden können. Der Stempel 7 und die Matrize 8 weisen einen Prägebereich 7a bzw. 8a auf, welcher zum Prägen eines Randbereichs der Öffnung 5 des Sandwichblechs 1 verwendet wird. In der dargestellten Vorrichtung wird der Randbereich daher sowohl stempelseitig als auch matrizenseitig verformt, so dass der Randbereich der Öffnung in Richtung Mitte des Sandwichblechs verformt wird, Grundsätzlich genügt aber eine einseitige Verformung, so dass die metallischen Deckbleche 2, 3 des Sandwichblechs Kontakt aufweisen.

Darüber hinaus sind in der Vorrichtung Mittel zur Erwärmung des Randbereichs der Öffnung 5 vorgesehen, welche vorliegend als Heizmanschetten 7b bzw. 8b jeweils den Prägebereich des Stempels 7 bzw. der Matrize 8 umgeben. Über diese beheizbaren Bereiche des Stempels 7 bzw. der Matrize 8 wird der Prägebereich 7a bzw. 8a des Stempels bzw. der Matrize erwärmt, so dass dieser bei Kontakt mit dem Sandwichblech bzw. mit den metallischen Deckschichten 2, 3 des Sandwichblechs die thermoplastische Kunststoffschicht 4 derart erwärmt, dass diese erweicht und über den Prägebereich des Stempels bzw. der Matrize das Kunststoffmaterial in einem Randbereich, welcher die Öffnung 5 im vorliegenden Beispiel vollständig umläuft, verdrängt wird und in die Öffnung gedrückt wird. Darüber hinaus sind temperierte Absaugmittel 9 vorgesehen, welche auf eine Temperatur erwärmt sind, so dass der thermoplastische Kunststoff, welcher aus dem Öffnungsbereich austritt und in die Absaugmittel eingesaugt wird, flüssig bleibt und auf einfache Weise abtransportiert werden kann. Die Absaugmittel 9 weisen hierzu elektrische Heizelemente 9a auf, welche für eine entsprechende Temperierung sorgen.

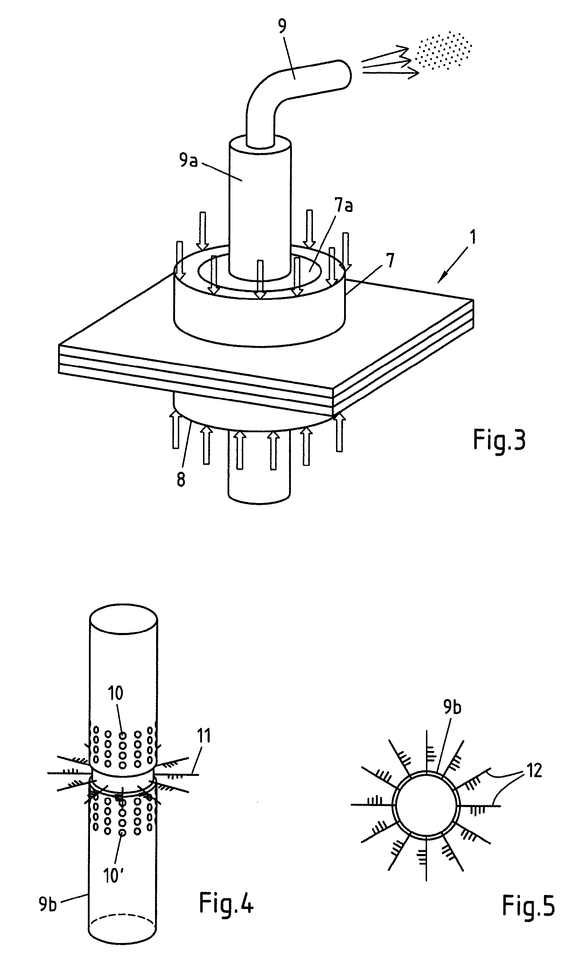

In Fig. 3 ist nun die Vorrichtung 6 aus Fig. 2 mit zusammengefahrenem Stempel 7 und Matrize 8 dargestellt. Gleichzeitig zeigt Fig. 3, dass der Stempel 7 im Bereich 7b bzw. die Matrize 8 im Bereich 8b Luftführungsmittel (durch Pfeile dargestellt) aufweist, um ein Absaugen des austretenden Materials im Bereich der Öffnung durch die Absaugmittel 9 zu ermöglichen. Die über die Luftführungsmittel in dem Stempel 7 bzw. in der Matrize 8 bereits erwärmte Luft wird sternförmig über die Absaugmittel 9, beispielsweise durch radial nach außen weisende Absaugöffnungen 10, welche in Fig. 2 dargestellt sind, abgesaugt. Das abgesaugte Material wird über die Absaugmittel 9 abgeführt, wie in Fig. 3 dargestellt ist.

In Fig. 4 ist ein Bereich 9b der Absaugmittel 9 dargestellt. Dieser Teil des Absaugmittels 9 besteht aus einem Zylinder, welcher einen Querschnitt kleiner als die Öffnung 5 aufweist und in die Öffnung 5 einführbar ist. Die zwei Bereiche 10 und 10' besitzen radial nach außen weisenden Öffnungen sowie eine radial nach außen stehenden Bürstenanordnung 11, welche zusätzlich zur mechanischen Reinigung der geprägten Randbereiche verwendet werden kann. Über die radial überstehende Bürstenanordnung kann beispielsweise der Randbereich 5b durch Drehen des Absaugmittebereichs 9b um seine Längsachse gereinigt werden.

In Fig. 5 ist eine Schnittansicht im Bereich der Bürstenanordnung 11 des Teils der Absaugmittel 9b dargestellt. Deutlich ist der radiale Verlauf der einzelnen Bürsten 12, in Fig. 5 zu erkennen.

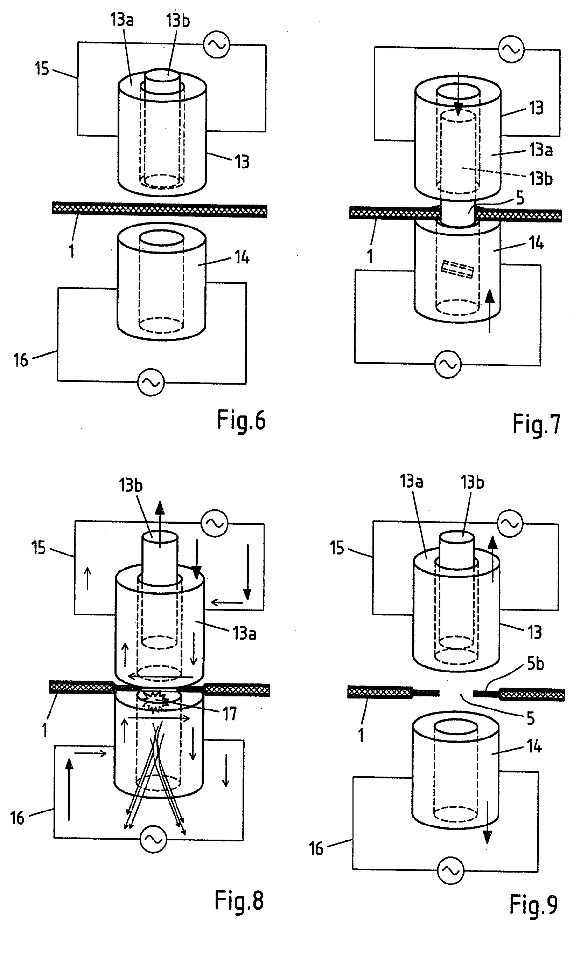

Die Fig. 6 bis 9 zeigen ein weiteres Ausführungsbeispiel einer Vorrichtung zur Herstellung einer Öffnung in einem Sandwichblech zu verschiedenen Zeitpunkten während der Durchführung eines Ausführungsbeispiels des erfindungsgemäßen Verfahrens dargestellt.

Zunächst zeigt Fig. 6 ein Sandwichblech 1, welches zwischen einer Matrize 14 und einem Stempel 13 angeordnet ist. Der Stempel 13 besteht einerseits aus einem Prägebereich 13a und andererseits aus einem Stanzbereich 13b. Darüber hinaus sind mit dem Wechselstromkreis Erwärmungsmittel in Fig. 6 dargestellt, welche eine Erwärmung des zu verformenden Randbereichs 5b der Öffnung des Sandwichblechs 1 ermöglichen. In einem ersten Verfahrensschritt wird, wie in Fig. 7 dargestellt, über den Stanzbereich 13b des Stempels 13 eine Öffnung 5 in das Sandwichblech 1 gestanzt. Bei diesem Verfahrensschritt wird die Matrize 14 als Gegenhalter verwendet und lediglich der Stanzbereich 13b des Stempels relativ zum Prägerbereich 13a des Stempels und der Matrize 14 bewegt. Da das Sandwichblech 1 zu diesem Zeitpunkt noch nicht erwärmt wurde, gelingt das Austanzen des Materials auf einfache Weise, ohne dass es zur Ausbildung von Kunststofffäden etc. kommt.

Im weiteren Verfahrensschritt werden durch Stromzufuhr die Bereiche des Sandwichblechs 1, welche durch den Prägebereich 13a und die Matrize 14 geprägt werden sollen, erwärmt. Hierbei besteht die Möglichkeit, im Prägebereich 13a sowie in der Matrize 14 eine Erwärmung derselben über einfache elektrische Heizelemente durchzuführen und anschließend durch konduktiv, d.h. durch Wärme leitenden Kontakt, den Randbereich 5b zu erwärmen. Andererseits besteht die Möglichkeit, Induktionsleiter vorzusehen, welche im Prägebereich 13a und in der Matrize 14 angeordnet sind und im Sandwichblech Wirbelströme erzeugen. Hierdurch können die metallischen Deckschichten 2, 3 des Sandwichblechs 1 lokal sehr schnell erwärmt werden, so dass dann auch die Kunststoffschicht 4 die notwendige Temperatur schnell erreicht. Wie Fig. 8 zeigt, werden Matrize 14 und der Prägebereich des Stempels 13a aufeinander zu bewegt, so dass das Kunststoffmaterial 17 in der Öffnung austritt. Durch in Fig. 6 bis 9 nicht dargestellte, temperierte Absaugmittel kann das Material 17 aus dem Öffnungsbereich auf einfache Weise entfernt werden.

In Fig. 9 ist schließlich dargestellt, wie der Stempel 7 und die Matrize 8, nunmehr in geöffnetem Zustand, das Sandwichblech 1 mit einer Öffnung 5, welche einen verformten Randbereich 5b besitzt, freigeben. Anders als in den Fig. 2 und 3 kann mit dem in Fig. 6 bis 9 dargestellten Ausführungsbeispiel der erfindungsgemäßen Vorrichtung das Stanzen der Öffnung in das Sandwichblech und auch das Prägen des Randbereichs der Öffnung des Sandwichblechs in einem Arbeitsschritt bzw. in bzw. mit einer einzigen Vorrichtung durchgeführt werden.

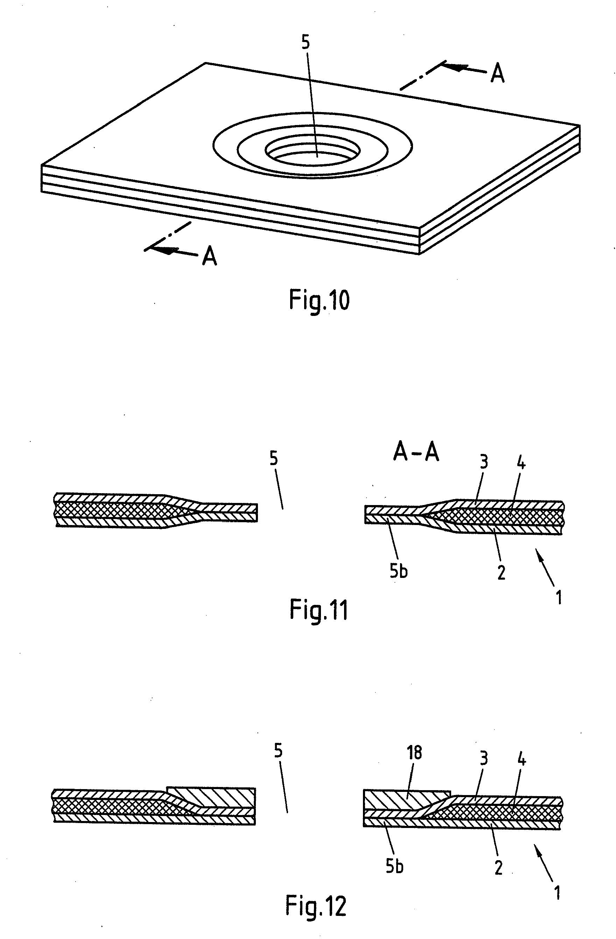

Das Ergebnis eines entsprechenden Verfahrens ist noch einmal in Fig. 10 dargestellt, welche in einer perspektivischen, schematischen Darstellung ein Sandwichblech 1 zeigt, welches ein Öffnung 5 umfasst, die von einem Randbereich 5b umgeben ist. Der Randbereich 5b ist in der Art verformt, dass Kunststoffschicht 4 aus dem Randbereich entfernt worden ist. Hierdurch ergibt sich ein Randbereich 5b, welcher dauerhaft die Haltekräfte von Befestigungsmitteln, beispielsweise Schrauben oder Nieten, aufnehmen kann. Zur Verdeutlichung des Aufbaus der in das Sandwichblech eingebrachten Öffnung ist in Fig. 11 eine Schnittansicht entlang der Schnittlinie A-A dargestellt. Alternativ ist in Fig. 12 ein Sandwichblech mit einer eingebrachten Öffnung in einer Schnittansicht dargestellt, in dem nur eine einseitige Verformung eines Deckblechs stattgefunden hat. Bei Bedarf kann ein Einlegeteil 18 eingesetzt werden, das beispielsweise den kompletten Randbereich 5b abdeckt, um die Kräfte des Kraftschlusses auf eine größere Fläche verteilen zu können.

Mit der erfindungsgemäßen Vorrichtung bzw. mit dem erfindungsgemäßen Verfahren können insofern mit hoher Prozesssicherheit Öffnungen in Sandwichbleche eingebracht werden, welche zur dauerhaften Aufnahme von Befestigungsmitteln geeignet sind. Die temperierten Ahsaugmitteln gewährleisten insbesondere einen sauberen Abtransport des aus den Randbereichen verdrängten Kunststoffmaterials.

## Patentansprüche

1. Verfahren zur Herstellung einer Öffnung in ein Sandwichblech (1), welches mindestens zwei metallische Deckschichten (2, 3) und mindestens eine zwischen den metallischen Deckschichten (2, 3) angeordnete aus einem thermoplastischen Kunststoff bestehende Kernschicht (4) aufweist, wobei die Öffnung (5) zum Verbinden des Sandwichblechs (1) mit einem weiteren Bauteil oder Blech unter Verwendung von Befestigungsmitteln geeignet ist, bei welchem unter Verwendung mindestens eines Stempels mindestens eine Öffnung (5) in das Sandwichblech (1) gestanzt wird,
wobei nach dem Stanzen der Öffnung (5) in das Sandwichblech (1) der Randbereich (5b) der Öffnung (5) erwärmt und derart verformt wird, dass die thermoplastische Kernschicht (4) zumindest teilweise entlang des Umfanges der Öffnung (5) verdrängt wird und die metallischen Deckschichten (2, 3) des Sandwichblechs (1) in diesen Bereichen in Kontakt gebracht werden, **dadurch gekennzeichnet, dass**
das austretende Material der Kernschicht (4) durch Verwendung von temperierten Absaugmitteln (9) entfernt wird, und über die temperierten Absaugmittel (9) während des Absaugens ein Erkalten des abgesaugtes Materials im Wesentlichen vermieden wird.

2. Verfahren nach Anspruch 1,
**dadurch gekennzeichnet, dass**
lochgestanzte Sandwichbleche (1) verwendet werden und der Randbereich (5b) der lochgestanzten Öffnungen in einem weiteren Arbeitsschritt verformt wird, so dass die metallischen Deckschichten (2, 3) im Randbereich (5b) in Kontakt gebracht werden.

3. Verfahren nach Anspruch 1,
**dadurch gekennzeichnet, dass**
das Stanzen der Öffnung (5) und das Verformen des Randbereichs (5b) in einer Vorrichtung in einem Arbeitsgang erfolgt.

4. Verfahren nach Anspruch 3,
**dadurch gekennzeichnet, dass**
mindestens ein Stempel (13) mit einem Prägebereich (13a) und einem Stanzbereich (13b) sowie mindestens eine Matrize (14) zum Stanzen der Öffnung und Verformen des Randbereichs (5b) verwendet werden, wobei in der Matrize eine Öffnung zur Aufnahme des ausgestanzten Sandwichblechmaterials vorgesehen ist und durch eine Relativbewegung des Stanzbereichs (13b) des Stempels gegenüber dem Prägebereich (13a) des Stempels und der Matrize (14) eine Öffnung (5) in das Sandwichblech (1) gestanzt wird.

5. Verfahren nach Anspruch 4,
**dadurch gekennzeichnet, dass**
vor und/oder während des Verformens des Randbereichs (5b) der Öffnung (5) der Prägebereich (13a) des Stempels und/oder die Matrize (14) derart erwärmt werden, dass durch Wärme leitenden Kontakt zwischen Prägebereich (13), Matrize (14) und Leichtblech (5) die Kernschicht im Randbereich (5b) der Öffnung konduktiv erwärmt wird und erweicht sowie anschließend das Material der Kernschicht (4) in die Öffnung (5) durch Verformen des Randbereichs verdrängt wird.

6. Verfahren nach einem der Ansprüche 1 bis 5,
**dadurch gekennzeichnet, dass**
vor oder während der Verformung des Randbereichs (5b) der Öffnung (5) die metallischen Deckschichten (2, 3) des Sandwichblechs im Randbereich (5b) induktiv erwärmt werden.

7. Verfahren nach einem der Ansprüche 1 bis 6,
**dadurch gekennzeichnet, dass**
die Absaugmittel (9) während des Verformens der Randbereiche (5b) der Öffnung (5) des Sandwichblechs das austretende Material zumindest teilweise radial in Richtung des Zentrums der Öffnung (5) absaugen.

8. Verfahren nach einem der Ansprüche 4 bis 7,
**dadurch gekennzeichnet, dass**
über Luftführungsmittel des Prägebereichs (13a) des Stempels und/oder der Matrize (14) Luft zum Absaugen des austretenden Materials der Kernschicht (4) zugeführt wird.

9. Verfahren nach einem der Ansprüche 1 bis 8,
**dadurch gekennzeichnet, dass**
die geprägte Oberfläche des Randbereichs (5b) der Öffnung (5) des Sandwichblechs (1) während oder nach dem Herstellen des Randbereichs gereinigt wird.

10. Vorrichtung zur Herstellung einer Öffnung in einem Sandwichblech, welche zum Verbinden des Sandwichblechs mit einem weiteren Bauteil oder Blech über Befestigungsmittel geeignet ist, umfassend einen Stempel (7,13), eine Matrize (8, 14) sowie Mittel zur Durchführung einer Relativbewegung zwischen Stempel (7, 13) und Matrize (8,14), insbesondere zur Durchführung eines Verfahrens nach einem der Ansprüche 1 bis 9,
wobei der Stempel (13) einen Prägebereich (7a, 13a) aufweist, Mittel zur Erwärmung (7a, 8a, 15, 16) eines Randbereichs (5b) mindestens einer Öffnung (5) des Sandwichblechs (1) vorgesehenen sind und über die Mittel zur Durchführung der Relativbewegung des Stempels durch den Prägebereich (13a) des Stempels die Kernschicht (4) des Sandwichblechs (1) aus dem Randbereich verdrängt werden kann,
**dadurch gekennzeichnet, dass**
temperierte Absaugmittel (9) vorgesehen sind, welche das austretende Material der Kernschicht aus der Öffnung des Sandwichblechs entfernen und ein Erkalten des Kernschichtmaterials im Wesentlichen verhindern können.

11. Vorrichtung nach Anspruch 10,
**dadurch gekennzeichnet, dass**
der Stempel (13) zusätzlich einen Stanzbereich (13b) zum Stanzen einer Öffnung (5) in das Sandwichblech aufweist.

12. Vorrichtung nach Anspruch 10 oder 11,
**dadurch gekennzeichnet, dass**
Mittel (15, 16) zur induktiven Erwärmung des Randbereichs der Öffnung des Leichtblechs oder Mittel zur Erwärmung des Prägebereichs (13a) des Stempels und/oder der Matrize (14) vorgesehen sind.

13. Vorrichtung nach einem der Ansprüche 10 bis 12,
**dadurch gekennzeichnet, dass**
die Absaugmittel (9) zusätzlich Mittel (11,12) zur mechanischen Entfernung von ausgetretenem Material der Kernschicht (4) aufweisen.

14. Vorrichtung nach einem der Ansprüche 10 bis 13,
**dadurch gekennzeichnet, dass**
die Absaugmittel (9) Luftführungsmittel zur Entfernung des abgesaugten Materials aus der Öffnung (5) des Sandwichblechs aufweisen und die Luftführungsmittel temperierbar sind.

15. Vorrichtung nach einem der Ansprüche 10 bis 14,
**dadurch gekennzeichnet, dass**
der Prägebereich (13a) des Stempels und/oder die Matrize (14) Luftführungsmittel aufweisen, über welche Luft zum Absaugen des austretenden Materials der Kernschicht von außen der Öffnung (5) des Sandwichblechs zugeführt werden kann.

16. Vorrichtung nach einem der Ansprüche 10 bis 15,
**dadurch gekennzeichnet, dass**
Absaugmittel vorgesehen sind, welche in die Öffnung des Sandwichblechs einführbar sind.

17. Vorrichtung nach Anspruch 16,
**dadurch gekennzeichnet, dass**
die Absaugmittel (9) mindestens eine radial nach außen weisende Absaugöffnung aufweisen.

## Claims

1. A method for manufacturing an opening in a sandwich sheet (1), which comprises at least two metallic cover layers (2, 3) and at least one core layer (4) consisting of a thermoplastic material and arranged between the metallic cover layers (2, 3), wherein the opening (5) is suitable for connecting the sandwich sheet (1) with a further component or sheet involving the use of fastening means, wherein using at least one punch, at least one opening (5) is punched into the sandwich sheet (1),
wherein after punching the opening (5) into the sandwich sheet (1) the edge region (5b) of the opening (5) is heated and deformed such that the thermoplastic core layer (4) is at least partially displaced along the circumference of the opening (5) and the metallic cover layers (2, 3) of the sandwich sheet (1) in these regions are brought into contact with each other,
**characterised in that**
the emerging material of the core layer (4) is removed by using temperature-controlled suction means (9) and cooling of the suctioned material is substantially avoided during the suction operation via the temperature-controlled suction means (9).

2. The method according to claim 1,
**characterised in that**
hole-punched sandwich sheets (1) are used and the edge region (5b) of the hole-punched openings is deformed in a further working step so that the metallic cover layers (2, 3) are brought into contact in the edge region (5b).

3. The method according to claim 1,
**characterised in that**
punching of the opening (5) and deforming of the edge region (5b) is effected in a device in one operation.

4. The method according to claim 3,
**characterised in that**
at least one punch (13) with an embossing region (13a) and a punching region (13b) as well as at least one die (14) for punching the opening and deforming the edge region (5b) are used, wherein an opening is provided in the die for receiving the punched-out sandwich sheet material, and due to a relative movement of the punching region (13b) of the punch relative to the embossing region (13a) of the punch and the die (14), an opening (5) is punched into the sandwich sheet (1).

5. The method according to claim 4,
**characterised in that**
prior to and/or during deformation of the edge region (5b) of the opening (5) the embossing region (13a) of the punch and/or the die (14) are heated such that due to a heat-conducting contact between the embossing region (13), the die (14) and the lightweight sheet (5) the core layer in the edge region (5b) of the opening is conductively heated and softened, and subsequently the material of the core layer (4) is displaced into the opening (5) by deforming the edge region.

6. The method according to one of claims 1 to 5,
**characterised in that**
prior to or during deformation of the edge region (5b) of the opening (5) the metallic cover layers (2, 3) of the sandwich sheet are inductively heated in the edge region (5b).

7. The method according to one of claims 1 to 6,
**characterised in that**
the suction means (9), during deformation of the edge region (5b) of the opening (5) of the sandwich sheet, extract the emerging material at least partially radially in direction of the centre of the opening (5).

8. The method according to one of claims 4 to 7,
**characterised in that**
air for extracting the emerging material of the core layer (4) is supplied via air guidance means of the embossing region (13a) of the punch and/or the die (14).

9. The method according to one of claims 1 to 8,
**characterised in that**
the embossed surface of the edge region (5b) of the opening (5) of the sandwich sheet (1) is cleaned during or after manufacturing the edge region.

10. A device for manufacturing an opening in a sandwich sheet, which is suitable for connecting the sandwich sheet to a further component or sheet via fastening means, comprising a punch (7,13), a die (8,14) and means for performing a relative movement between the punch (7, 13) and the die (8, 14), in particular for performing a method according to one of claims 1 to 9,
wherein the punch (13) comprises an embossing region (7a, 13a), means are provided for heating (7a, 8a, 15, 6) an edge region (5b) of at least one opening (5) of the sandwich sheet (1), and the core layer (4) of the sandwich sheet (1) can be displaced out of the edge region via the means for performing the relative movement of the punch through the embossing region (13a) of the punch,
**characterised in that**
temperature-controlled suction means (9) are provided, which remove the material of the core layer emerging from the opening of the sandwich sheet and can substantially prevent cooling of the core layer material.

11. The device according to claim 10,
**characterised in that**
the punch (13) additionally comprises a punching region (13b) for punching an opening (5) into the sandwich sheet.

12. The device according to claim 10 or 11,
**characterised in that**
means (15, 16) to inductively heat the edge region of the opening of the lightweight sheet or means to heat the embossing region (13a) of the punch and/or the die (14) are provided.

13. The device according to one of claims 10 to 12,
**characterised in that**
the suction means (9) additionally comprise means (11, 2) for the mechanical removal of the emerged material of the core layer (4).

14. The device according to one of claims 10 to 13,
**characterised in that**
the suction means (9) comprise air-guidance means for the removal of the extracted material from the opening (5) of the sandwich sheet and that the air-guidance means can be temperature-controlled.

15. The device according to one of claims 10 to 14,
**characterised in that**
the embossing region (13a) of the punch and/or the die (14) comprise air-guidance means, via which air for extracting the emerging material of the core layer can be supplied from outside to the opening (5) of the sandwich sheet.

16. The device according to one of claims 10 to 15,
**characterised in that**
suction means are provided which can be inserted into the opening of the sandwich sheet.

17. The device according to claim 16,
**characterised in that**
the suction means (9) comprise at least one suction opening pointing radially outwards.

## Revendications

1. Procédé de réalisation d'un orifice dans une tôle sandwich (1) qui présente au moins deux couches de couverture métalliques (2,3) et au moins une couche centrale (4) disposée entre les couches de couverture métalliques (2,3) et composée d'une matière thermoplastique, l'orifice (5) étant apte à relier la tôle sandwich (1) à une autre pièce ou tôle en utilisant des moyens de fixation, dans lequel, en utilisant au moins un poinçon, au moins un orifice (5) est percé dans la tôle sandwich (1),
dans lequel, après le perçage de l'orifice (5) dans la tôle sandwich (1), la périphérie (5b) de l'orifice (5) est chauffée et déformée de manière à ce que la couche centrale thermoplastique (4) soit refoulée du moins partiellement le long de la circonférence de l'orifice (5) et que les couches de couverture métalliques (2,3) de la tôle sandwich (1) soient amenées en contact dans ces zones,
**caractérisé en ce que**
le matériau sortant de la couche centrale (4) est enlevé en utilisant des moyens d'aspiration tempérés (9) et que, grâce aux moyens d'aspiration tempérés (9), un refroidissement du matériau aspiré est substantiellement évité pendant l'aspiration.

2. Procédé selon la revendication 1,
**caractérisé en ce**
**qu'**on utilise des tôles sandwichs perforées (1) et que la périphérie (5b) des orifices pratiqués est déformée dans une autre étape opératoire de manière à ce que les couches de couverture métalliques (2, 3) soient amenées en contact dans la périphérie (5b).

3. Procédé selon la revendication 1,
**caractérisé en ce que**
le perçage de l'orifice (5) et la déformation de la périphérie (5b) ont lieu en une étape opératoire dans un dispositif.

4. Procédé selon la revendication 3,
**caractérisé en ce**
**qu'**on utilise au moins un poinçon (13) doté d'une zone de gaufrage (13a) et d'une zone de perçage (13b) ainsi qu'au moins une matrice (14) pour percer l'orifice et déformer la périphérie (5b), un orifice destiné à recevoir le matériau enlevé dans la tôle sandwich étant prévu dans la matrice et un orifice (5) étant pratiqué par un mouvement relatif de la zone de perçage (13b) du poinçon par rapport à la zone de gaufrage (13a) du poinçon et à la matrice (14) dans la tôle sandwich (1).

5. Procédé selon la revendication 4,
**caractérisé en ce que**,
avant et/ou pendant la déformation de la périphérie (5b) de l'orifice (5), la zone de gaufrage (13a) du poinçon et/ou la matrice (14) sont chauffées de manière à ce que, par un contact conducteur thermique entre la zone de gaufrage (13), la matrice (14) et la tôle légère (5), la couche centrale soit chauffée avec conductivité dans la périphérie (5b) de l'orifice et ramollisse puis qu'ensuite le matériau de la couche centrale (4) soit refoulé dans l'orifice (5) par déformation de la périphérie.

6. Procédé selon une des revendications 1 à 5,
**caractérisé en ce que**
avant et/ou pendant la déformation de la périphérie (5b), les couches de couverture métalliques (2,3) de l'orifice (5) de la tôle sandwich sont chauffées par induction dans la périphérie 5b).

7. Procédé selon une des revendications 1 à 6,
**caractérisé en ce que**
les moyens d'aspiration (9), pendant la déformation des périphéries (5b) de l'orifice (5) de la tôle sandwich, aspirent le matériau sortant du moins partiellement radialement en direction du centre de l'orifice (5).

8. Procédé selon une des revendications 4 à 7,
**caractérisé en ce que**,
à l'aide de moyens de guidage d'air de la zone de gaufrage (13a) dru poinçon et/ou de la matrice (14), de l'air est acheminé pour aspirer le matériau sortant de la couche centrale (4).

9. Procédé selon une des revendications 1 à 8,
**caractérisé en ce que**
la surface gaufrée de la périphérie (5b) de l'orifice (5) de la tôle sandwich (1) est nettoyée pendant ou après la réalisation de la périphérie.

10. Dispositif de réalisation d'un orifice dans une tôle sandwich, qui est apte à relier la tôle sandwich à une autre pièce ou tôle par des moyens de fixation, comprenant un poinçon (7, 13), une matrice (8, 14) ainsi que des moyens de réalisation d'un mouvement relatif entre le poinçon (7, 13) et la matrice (8,14), en particulier pour la réalisation d'un procédé selon une des revendications 1 à 9,
dans lequel le poinçon (13) présente une zone de gaufrage (7a, 13a), des moyens de chauffage (7a, 8a, 15, 16) d'une périphérie (5b) d'au moins un orifice (5) de la tôle sandwich (1) sont prévus et la couche centrale (4) de la tôle sandwich (1) peut être refoulée la de la périphérie par les moyens de réalisation du mouvement relatif du poinçon dans la zone de gaufrage (13a) du poinçon, **caractérisé en ce que**
sont prévus des moyens d'aspiration tempérés (9) qui peuvent enlever le matériau sortant de la couche centrale de l'orifice de la tôle sandwich et empêcher substantiellement un refroidissement du matériau de la couche centrale.

11. Dispositif selon la revendication 10,
**caractérisé en ce que**
le poinçon (13) présente en outre une zone de perçage (13b) pour le perçage d'un orifice (5) dans la tôle sandwich.

12. Dispositif selon la revendication 10 ou 11,
**caractérisé en ce que**
des moyens (15, 16) de chauffage inductif de la périphérie de l'orifice de la tôle légère ou des moyens de chauffage de la zone de gaufrage (13a) du poinçon et/ou de la matrice (14) sont prévus.

13. Dispositif selon une des revendications 10 à 12,
**caractérisé en ce que**
les moyens d'aspiration (9) présentent en outre des moyens (11,12) d'enlèvement mécanique du matériau sortant de la couche centrale (4).

14. Dispositif selon une des revendications 10 à 13,
**caractérisé en ce que**
les moyens d'aspiration (9) présentent des moyens de guidage d'air pour enlever le matériau aspiré de l'orifice (5) de la tôle sandwich et que les moyens de guidage d'air peuvent être tempérés.

15. Dispositif selon une des revendications 10 à 14,
**caractérisé en ce que**
la zone de gaufrage (13a) du poinçon et/ou la matrice (14) présentent des moyens de guidage d'air grâce auxquels de l'air peut être acheminé pour aspirer le matériau sortant de la couche centrale depuis l'extérieur de l'orifice (5) de la tôle sandwich.

16. Dispositif selon une des revendications 10 à 15,
**caractérisé en ce que**
sont prévus des moyens d'aspiration qui peuvent être introduits dans l'orifice de la tôle sandwich.

17. Dispositif selon la revendication 16,
**caractérisé en ce que**
les moyens d'aspiration (9) présentent au moins un orifice d'aspiration tourné radialement vers l'extérieur.
